# EUROPÄISCHE PATENTSCHRIFT

(11) **EP 1 223 656 B1**
(45) Veröffentlichungstag und Bekanntmachung des Hinweises auf die Patenterteilung: **18.04.2007**
(21) Anmeldenummer: 01130141.3
(22) Anmeldetag: 19.12.2001
(51) Int. Cl.: H02J 9/04, B41F 33/12

(54) **Unterbrechungsfreie Stromversorgung für eine Rotationsdruckmaschine**
Uninterruptible power supply for a rotary printing machine
Alimentation électrique sans coupure pour une machine rotative d'impression

(30) Priorität: 22.12.2000 DE 10064755
(43) Veröffentlichungstag der Anmeldung: 17.07.2002
(73) Patentinhaber: MAN Roland Druckmaschinen AG, 63012 Offenbach (DE)
(72) Erfinder: Liebold, Rainer, 08527 Plauen/OT Neundorf (DE); Kämpf, Detlef, 08525 Plauen (DE); Hammer, Josef, 08525 Plauen (DE)
(74) Vertreter: Schober, Stefan

(56) Entgegenhaltungen:
- WO-A-00/69045
- US-A- 4 675 538
- US-A- 5 309 834
- US-A- 5 612 580
- PATENT ABSTRACTS OF JAPAN vol. 1998, no. 08, 30. Juni 1998 (1998-06-30) & JP 10 071440 A (AIDA ENG LTD), 17. März 1998 (1998-03-17)
- BOUWKNEGT K: "UPS systems for remote or temporary telecom locations" TELECOMMUNICATIONS ENERGY CONFERENCE, 1995. INTELEC '95., 17TH INTERNATIONAL THE HAGUE, NETHERLANDS 29 OCT.-1 NOV. 1995, NEW YORK, NY, USA,IEEE, US, 29. Oktober 1995 (1995-10-29), Seiten 585-590, XP010161295 ISBN: 0-7803-2750-0
- LAMOREE J ET AL: "Voltage sag analysis case studies" INDUSTRIAL AND COMMERCIAL POWER SYSTEMS TECHNICAL CONFERENCE, 1993. CONFERENCE RECORD, PAPERS PRESENTED AT THE 1993 ANNUAL MEETING ST. PETERSBURG, FL, USA 2-6 MAY 1993, NEW YORK, NY, USA,IEEE, US, 2. Mai 1993 (1993-05-02), Seiten 55-61, XP010110121 ISBN: 0-7803-0937-5
- HARADA T ET AL: "Rationalization of electricity operation by centralized electricity monitoring and control equipment" PROCEEDINGS OF THE INTERNATIONAL TELECOMMUNICATIONS ENERGY CONFERENCE.(INTELEC). KYOTO, NOV. 5 - 8, 1991, NEW YORK, IEEE, US, Bd. CONF. 13, 5. November 1991 (1991-11-05), Seiten 523-528, XP010040406 ISBN: 0-87942-670-5
- GERTKEMPER C: "MODULARE SYSTEMLOESUNG FUER LOKALE ENERGIEQUALITAET" ELEKTROTECHNISCHE ZEITSCHRIFT - ETZ, VDE VERLAG GMBH. BERLIN, DE, Bd. 120, Nr. 18, September 1999 (1999-09), Seiten 14-16, XP000913277 ISSN: 0948-7387
- WINDHORN A: "A HYBRID STATIC/ROTARY UPS SYSTEM" IEEE TRANSACTIONS ON INDUSTRY APPLICATIONS, IEEE INC. NEW YORK, US, Bd. 28, Nr. 3, 1. Mai 1992 (1992-05-01), Seiten 541-545, XP000306102 ISSN: 0093-9994
- LENGEFELD H C: "ROTARY UPS-MORE RELIABLE FOR NEW COMPUTERS" COMPUTER TECHNOLOGY REVIEW, WESTWORLD PRODUCTION CO. LOS ANGELES, US, Bd. 9, Nr. 16, 1990, Seiten 107-108,110-111, XP000096016 ISSN: 0278-9647

## Beschreibung

Die Erfindung betrifft eine Stromversorgung für eine Rotationsdruckmaschine aus einem Kundennetz.

Die Netzspannungsversorgung beim Betreiber einer Druckmaschine (Kunde) ist häufig instabil. Es treten Spannungsschwankungen und -ausfälle auf, die im Regelfall ein Abschalten der Druckmaschine zur Folge haben. Beim derzeitigen Stand der Antriebstechnik sind Druckmaschinen mit wellenlosen Hauptantriebssystemen ausgestattet. Werden derartige Antrieb stromlos, so trudeln rotierende Zylinder aus mit der Gefahr von Bahnrissen und Wicklern, die Maschinenschäden zur Folge haben können. Weiterhin ist insbesondere bei größeren Druckmaschinenanlagen ein hoher Zeitaufwand erforderlich, um wieder die Produktionsbereitschaft herzustellen. Bei häufigen Ausfällen ist dann sogar die gesamte Produktion gefährdet. Aus den Dokumenten US-A-5,612,580 und US-A-4,675,538 ist es auch bekannt, bei Netzausfall mittels einer hinterlegten Steuerfolge einen definierten Produktionshalt zu aktivieren und wahlweise einen Standby-Betrieb zu erreichen.

Es ist Aufgabe der Erfindung, eine Vorrichtung zu schaffen, die die Druckmaschine bei Netzspannungsstörungen und -ausfällen in einen kontrollierten Betriebszustand runterfährt und mit reduziertem Energiebedarf die Druckmaschine im Stand-by-Betrieb hält und auch einen reduzierten Betrieb (Druckbetrieb) dabei ermöglicht.

Die Aufgabe wird erfindungsgemäß mit den Merkmalen des unabhängigen Anspruchs gelöst. Dank der unterbrechungsfreien Stromversorgung sind zumindest die Operationen für einen standardmäßig definierten Produktionshalt durchführbar.

Je nach Ausgestaltung der Erfindung kann die Druckmaschine für den Zeitraum des Netzausfalles auch im Standby-Betrieb gehalten werden, so dass bei Spannungswiederkehr die Produktionsbereitschaft gegeben ist. Es kann auch die Sicherstellung des Druckbetriebes für einige Sekunden bis zu mehreren Stunden gegeben werden.

Die erfindungsgemäße Stromversorgung ist unabhängig vom Druckmaschinentyp und -ausrüstungsgrad realisierbar und optional projektierbar, wobei die Standard- bzw. Grundausstattung der Druckmaschine nicht verändert werden muss. Es werden Maschinenstillstandszeiten und -schäden vermieden sowie ein definiertes Anhalten der Maschine auch im Falle eines Stromausfalls ohne Papierreißer gewährleistet.

Vorteilhafte Weiterbildungen ergeben sich aus den Unteransprüchen in Verbindung mit der Beschreibung.

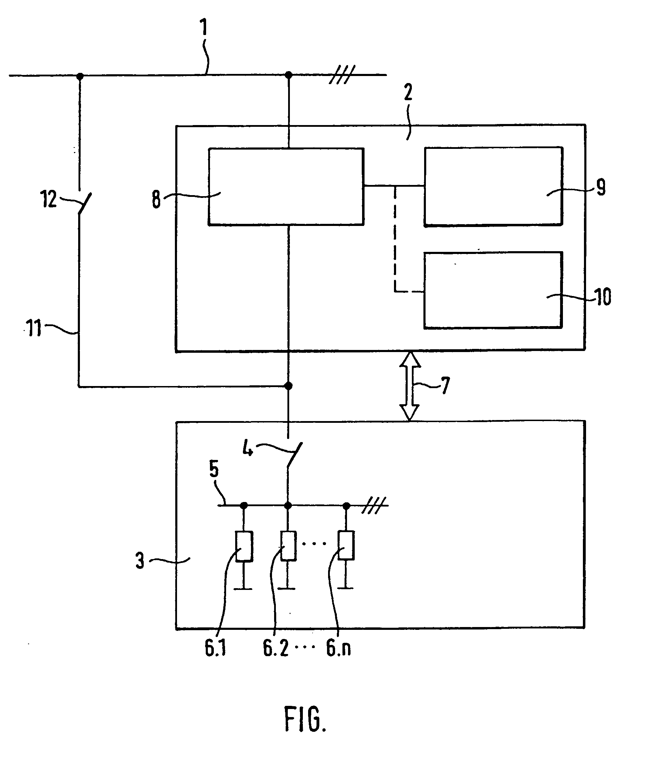

Die Erfindung soll nachfolgend an einem Ausführungsbeispiel näher erläutert werden. In der einzigen Figur ist das Blockschaltbild für die Stromversorgung einer Rotationsdruckmaschine gezeigt.

An ein Kundennetz 1 ist eingangsseitig eine Unterbrechungsfreie Stromversorgung (USV) 2 angeschlossen, die ausgangsseitig eine Rotationsdruckmaschine 3 speist. Schematisch ist von letzterer nur der Anlagen-Hauptschalter 4 gezeigt, von dem der Strompfad zu einer Anlagen-Sammelschiene 5 führt, an die die Verbraucher 6.1, 6.2,......6.n der Rotationsdruckmaschine 3 angeschlossen sind. Die Rotationsdruckmaschine 3 steht über einen Datenbus 7 mit der USV 2 in Verbindung.

Die USV 2 enthält als wesentliche Bestandteile ein Steuergerät 8, einen Energiespeicher 9 und eine Notstromversorgung 10. Die USV 2 ist mittels einer vom Kundennetz 1 zum Anlagen-Hauptschalter 4 führenden Leitung 11 nebst Schalter 12 überbrückbar.

Die Rotationsdruckmaschine 3 wird von dem Kundennetz 1 unter Zwischenschaltung der USV 2 gespeist. Bei eingeschaltetem Anlagen-Hauptschalter 4 werden die Verbraucher 6.1, 6.2, ... 6.n über die Anlagen-Sammelschiene 5 mit Strom gespeist. Die USV 2 ist on-line zwischengeschaltet. Es ist auch ein Off-line-Betrieb der USV denkbar, wobei in diesem Falle die USV 2 mit einer geeigneten Schaltung ohne Spannungseinbruch zuschaltbar ist.

Eine auftretende Netzstörung, beispielsweise Netzspannungsschwankungen oder einen Ausfall der Netzspannung, signalisiert die USV 2 über den Datenbus 7 der Rotationsdruckmaschine. Dabei stellt die USV 2 die Stromversorgung der Rotationsdruckmaschine über den Energiespeicher 9 weiterhin sicher.

Die Rotationsdruckmaschine 3 kann auf die signalisierte Netzstörung auf verschiedene Weisen reagieren. Beispielsweise wird bei einem völligen Ausfall der Netzspannung eine in der Maschinensteuerung der Rotationsdruckmaschine hinterlegte Steuerfolge zur Auslösung eines standardmäßig definierten Produktionshalts ausgelöst. Im weiteren Verlaufe kann eine Steuerfolge ausgelöst werden, die die Rotationsdruckmaschine 3 in einen Stand-by-Betrieb versetzt. Dabei können auch einzelne Verbraucher 6.1, 6.2, ... 6.n abgeschaltet werden. Es sind dies z. B. Kühlaggregate und Pumpen für Betriebsmedien. Die Steuerfolgen sind beispielsweise in speicherprogrammierbaren Steuerungen abgelegt.

In einer weiteren Variante ist die USV 2 zur Übernahme der Stromversorgung für eine Weiterführung des Druckbetriebes ausgelegt. Diese Variante ist beispielsweise vorgesehen, wenn dies ein Betreiber der Druckmaschine aus wirtschaftlichen Gründen wünscht. In diesem Falle ist der Energiespeicher 9 der USV 2 entsprechend groß bemessen. Bei Bedarf wird die Notstromversorgung 10 zugeschaltet, die beispielsweise als Dieselmotor betriebenes Notstromaggregat ausgeführt ist.

### Bezugszeichen:

- **1**: Kundennetz
- **2**: Unterbrechungsfreie Stromversorgung (USV)
- **3**: Rotationsdruckmaschine
- **4**: Anlagen-Hauptschalter
- **5**: Anlagen-Sammelschiene
- **6.1**: Verbraucher
- **6.2**: Verbraucher
- **.**: Verbraucher
- **.**: Verbraucher
- **.**: Verbraucher
- **6.n**: Verbraucher
- **7**: Datenbus
- **8**: Steuergerät
- **9**: Energiespeicher
- **10**: Notstromversorgung
- 11: Leitung
- **12**: Schalter

## Patentansprüche

1. Stromversorgung für eine Rotationsdruckmaschine (3) mit wellenlosem Hauptantriebssystems aus einem Kundennetz (1), wobei die Rotationsdruckmaschine (3) von einer unterbrechungsfreien Stromversorgung (2) gespeist wird, die eingangsseitig an dem Kundennetz (1) anliegt, **dadurch gekennzeichnet, dass** bei einem Ausfall der Netzspannung zunächst eine in der Maschinensteuerung (8) der Rotationsdruckmaschine (3) hinterlegte Steuerfolge zur Auslösung eines standardmäßig definierten Produktionshalt aktivierbar ist und dass im weiteren Verlauf eine Steuerfolge ausgelöst wird, die die Rotationsdruckmaschine (3) in einen Standby-Betrieb versetzt, bei dem einzelne Verbraucher (6.1, 6.2, 6.n) in Form von Kühlaggregaten und Pumpen abschaltbar sind.

2. Stromversorgung nach Anspruch 1, **dadurch gekennzeichnet, dass** die USV (2) einen die Rotationsdruckmaschine (3) speisenden Energiespeicher (9) aufweist.

3. Stromversorgung nach Anspruch 2, **dadurch gekennzeichnet, dass** dem Energiespeicher (9) eine Notstromversorgung (10) parallel zuschaltbar ist.

4. Stromversorgung nach einem der vorherigen Ansprüche, **dadurch gekennzeichnet, dass** in der Maschinensteuerung der Rotationsdruckmaschine (3) Steuerfolgen zur Herstellung eines kontrollierten Betriebszustandes der Rotationsdruckmaschine (3) hinterlegt sind, die bei Signalisierung einer Störung des Kundennetzes (1) aktivierbar sind.

5. Stromversorgung, insbesondere nach einem der Ansprüche 1 bis 4, **dadurch gekennzeichnet, dass** bei einer Störung des Kundennetzes (1) die unterbrechungsfreie Stromversorgung (2) die Stromversorgung zur Weiterführung des Druckbetriebes übernimmt.

## Claims

1. Power supply for a rotary printing machine (3) with a shaftless main drive system from a customer network (1), the rotary printing machine (3) being fed by an uninterruptible power supply (2) applied to the customer network (1) on the input side, **characterised in that** in the event of a failure of the network voltage in the first instance a control sequence stored in the machine control (8) of the rotary printing machine (3) can be activated in order to trigger a production-hold that is defined in a standard way, and **in that** later on a control sequence is triggered that puts the rotary printing machine (3) in stand-by mode in which individual loads (6.1, 6.2, 6.n) in the form of cooling units and pumps can be switched off.

2. Power supply according to claim 1, **characterised in that** the uninterruptible power supply (2) has an energy store (9) that feeds the rotary printing machine (3).

3. Power supply according to claim 2, **characterised in that** an emergency power supply (10) can be connected in parallel with the energy store (9).

4. Power supply according to one of the preceding claims, **characterised in that** stored in the machine control of the rotary printing machine (3) in order to produce a controlled operating state of the rotary printing machine (3) there are control sequences that can be activated when a disturbance of the customer network (1) is signalled.

5. Power supply, in particular according to one of claims 1 to 4, **characterised in that** in the event of a disturbance of the customer network (1) the uninterruptible power supply (2) takes over the power supply in order to continue the printing operation.

## Revendications

1. Alimentation électrique pour une machine rotative d'impression (3) avec système d'entraînement principal sans arbre à partir d'un réseau client (1), alimentant la machine rotative d'impression (3) par une alimentation électrique sans coupure (2) côté entrée du réseau client (1),
**caractérisée en ce qu'**
en cas de panne de la tension secteur, tout d'abord une séquence de commande mémorisée dans la commande (8) de la machine rotative d'impression (3) est activée pour déclencher un arrêt de la production défini de façon standard, et on déclenche par la suite, une séquence de commande qui met la machine rotative d'impression (3) en un état de veille, dans lequel les divers appareils consommateurs de courant (6.1, 6.2, 6.n) sous forme de groupes frigorifiques et de pompes sont coupés.

2. Alimentation électrique selon la revendication 1,
**caractérisée en ce que**
l'alimentation électrique sans coupure (2) comporte un accumulateur d'énergie (9) alimentant la machine rotative d'impression (3).

3. Alimentation électrique selon la revendication 2,
**caractérisée en ce qu'**
une alimentation électrique de secours (10) peut être commutée parallèlement à l'accumulateur d'énergie (9).

4. Alimentation électrique selon une des revendications précédentes,
**caractérisée en ce que**
des séquences de commande pour le rétablissement d'un état de fonctionnement contrôlé de la machine rotative d'impression (3), activées en cas de signalisation d'une anomalie du secteur client (1), sont mémorisées dans la commande de la machine rotative d'impression (3).

5. Alimentation électrique, en particulier selon l'une des revendications 1 à 4,
**caractérisée en ce qu'**
en cas d'anomalie du réseau client (1), l'alimentation électrique sans coupure (2) assure l'alimentation électrique pour la poursuite du fonctionnement de l'impression.
